Europäisches Patentamt

European Patent Office

Office européen des brevets

(19)

(11) Numéro de publication: **0 241 348**
A1

## (12) DEMANDE DE BREVET EUROPEEN

(21) Numéro de dépôt: **87400676.0**

(22) Date de dépôt: **26.03.87**

(51) Int. Cl.³: **F 02 M 31/12**

(30) Priorité: **07.04.86 FR 8604917**

(43) Date de publication de la demande:
**14.10.87 Bulletin 87/42**

(84) Etats contractants désignés:
**CH DE FR GB IT LI NL SE**

(71) Demandeur: **INOTEC Société à Responsabilité Limitée**
**33 rue de Saint Cloud**
**F-92400 Ville d'Avray(FR)**

(72) Inventeur: **Grenet, Edouard Paul**
**2 rue Félix Faure**
**F-92600 Asnieres(FR)**

(74) Mandataire: **Petrovitch, Suzanne et al,**
**Office Blétry 2, boulevard de Strasbourg**
**F-75010 Paris(FR)**

(54) **Procédé et dispositif de défigeage des carburants.**

(57) L'invention concerne un procédé et un dispositif de défigeage des carburants pour moteurs à inflammation par compression et pour installations de chauffage, le dispositif étant conçu pour éviter ou résorber le colmatage des filtres par les cristaux de paraffines, en y projetant des filets de carburant très chauds (jusqu'à 70°C). Le dispositif comprend une ou plusieurs résistances électriques (18) du type circuit extra-plat formé sur un support (17) électriquement isolant et ensuite recouvert d'un revêtement électriquement isolant, ces résistances étants placées dans une ou plusieurs chambres (1) de faible volume par rapport à celui du filtre et situées en amont immédiat des éléments filtrants. Le dispositif est tel que le carburant suive un trajet approximativement en U autour de l'élément chauffant. Un capteur électrique (19) de régulation thermique baigne dans le flux du carburant. Ce capteur à courant faible, dont la résistance varie selon la température, est un semi-conducteur du type CTN, CTP ou transistor, relié à un circuit de détection des seuils formé par un pont de Wheatstone suivi d'un comparateur analogique, ce circuit étant pourvu de moyens de protection électrique.

### FIG.1c

La présente invention se rapporte à un dispositif de défigeage des cristaux des paraffines incluses dans les carburants diésel et les fiouls légers,cristaux qui précipitent sur la surface extérieure des éléments filtrants des moteurs à inflammation par compression ou d'autres installations, par exemple les installations de chauffage, ce dispositif comprenant une ou des résistances électriques qui, dans les applications aux véhicules à moteurs diésel, sont alimentées par la batterie ou l'alternateur.

L'aggravation des phénomènes de cristallisation des carburants allant des carburants diésel aux fiouls légers, est liée à une double évolution :

- Le maillage des éléments filtrants est de plus en plus fin : de 30 microns dans les années soixante, il est passé progressivement à 10 microns et récemment à 5 microns. Il pourrait descendre à 2 microns dans un futur proche et à ce moment-là les éléments de filtration se colmateront dès l'apparition du point de trouble du carburant.

- La présence de quantités croissantes de grosses molécules de paraffines : dans les carburants diésel et les fiouls légers il y a toujours eu de petites molécules de paraffines. Celles-ci, qui ne comprennent que quelques atomes de carbone dans leur composition, précipitent vers 0°C sous forme de microcristaux de 1 à 2 microns, c'est le point de trouble. Avec un froid vif, ces microcristaux se coagulent en grumeaux, puis en mélasses. Jusqu'à maintenant, les pompes peuvent les aspirer même à des températures très basses, car elles traversent les filtres à pores de 5 microns. Il est important de noter que ces petits cristaux refondent à peu près à leur température d'apparition.

Depuis le début des crises pétrolières, pour des raisons d'économie au raffinage, les pétroliers laissent, dans les carburants diésel et les fiouls légers, une quantité croissante de grosses molécules de paraffines. Celles-ci réagissent au froid de toute autre façon. Elles restent en surfusion une ou plusieurs semaines même par très grand froid. Les pompes peuvent donc les aspirer mêlées aux grumeaux et mélasses décrites ci-dessus. Cependant, il suffit d'un choc, comme par exemple la précipitation des carburants sur les éléments filtrants, pour causer leur cristallisation en quelques minutes, voire quelques secondes; leurs cristaux atteignent 80 à 200 Microns. Or, une fois formés, ils fondent difficilement : à 25° centigrades, 20% sont fondus, à 45°C 80% et les derniers entre 60 et 65°C. Leur température de fusion en effet est d'autant plus élevée qu'il entre un plus grand nombre d'atomes de carbone dans la composition de leurs molécules.

La présence systématique d'additifs, si elle modifie certains aspects physiques des phénomènes défavorables décrits ci-dessus, n'en change cependant pas les effets pratiques, c'est-à-dire le colmatage des filtres.

Un dispositif de défigeage efficace doit donc comporter une surface chauffante approchant 70°C. Or, pour qu'il n'y ait ni perte de puissance ni endommagement des moteurs, il faut éviter, à l'issue de la période de préchauffe, avant lancement du moteur, de réchauffer le carburant diésel ou le fioul léger au-delà de 40°C. Il faut donc dissocier la régulation de température de la surface des résistances de défigeage de celle de la température du flux de carburant diésel ou de fioul léger. Il convient également de remarquer qu'en ce qui concerne le défigeage sur véhicules, ceux-ci ne disposent pas, dans leur conception de série, d'une source électrique suffisante pour élever la température moyenne du flux au-dessus du point de fusion des gros cristaux de paraffine. On entend par "défigeage" la fusion des cristaux de paraffine et non pas seulement un réchauffage retardant la cristallisation des paraffines.

Pour les raisons exposées ci-dessus, la présente invention préconise, et c'est son premier objet, un procédé de défigeage des carburants contenant des paraffines, lorsque celles-ci, sous l'effet du froid, obstruent l'élément filtrant du filtre et du préfiltre lorsqu'il existe, placés sur le circuit d'alimentation d'un moteur à inflammation par compression ou d'une installation de chauffage, une pompe étant située en aval du filtre pour aspirer le carburant provenant d'un réservoir, procédé suivant lequel on dispose une source de chaleur dans une chambre de chauffe, qui est placée en amont et à proximité dudit élément filtrant et qui sera traversée par le flux de carburant, ce procédé étant caractérisé en ce que l'on utilise une chambre de chauffe de faible volume par rapport au volume du filtre ou du préfiltre et une source de chaleur régulée à 70°C environ, qui projettera dans l'élément filtrant, au démarrage de la pompe, les quelques centimètres cubes de carburant, contenus dans la chambre de chauffe et préchauffés à 70°C environ, et qui projettera ensuite dans l'élément filtrant des filets très chauds de carburant inclus dans le flux de celui-ci, dont la température moyenne reste inférieure à 40°C, tandis que certains au moins desdits filets ont une température voisine de 70°C, ladite source de chaleur présentant une grande surface de contact avec le carburant, cette surface étant isolée électriquement par mesure de sécurité et ayant une température homogène, et l'écoulement du carburant dans la chambre de chauffe, lorsque la pompe est en fonctionnement, étant dirigé autour de la source de chaleur de telle sorte qu'il y ait le plus grand temps de contact possible et un échange thermique élevé entre la source de chaleur et le carburant et que celui-ci soit mis en turbulence, ce qui engendre une disparité des températures du flux instantané dans son volume et dans le temps et fournit par intermittence, à la sortie de la chambre de chauffe, des filets ou des jets de carburant à des températures proches de la température de surface de l'élément chauffant.

Ceci exclut les solutions adoptées avec les dispositifs décrits dans les brevets antérieurs et dont l'élément chauffant est situé dans une chambre de volume relativement important (brevet US.4091265 déposé le 6.8.1975 et le brevet EP.155839 déposé le 18.03.1985), ou dont le système de régulation thermique déterminé par la nature même de l'élément chauffant (CTP à coefficient de température positif, ou transistor de puissance solidaire ou non d'un échangeur à ailettes) coupe l'alimentation électrique à une température trop basse pour faire fondre les cristaux des grosses paraffines (brevet US.4091265 du 6.8.1975 - brevet britannique 2483013 du 20.5.1980 - brevet européen 0051936 du 20.10.1981, toutes ces dates étant des dates de dépôt).

Le rapport du volume de la chambre de chauffe à celui du filtre est de l'ordre de 1 à 10 à 1 à 20 suivant la présente invention.

Un autre objet de l'invention est un dispositif pour la mise en oeuvre du procédé défini ci-dessus. Ce dispositif, qui comprend une chambre de chauffe dans laquelle est logé un élément chauffant, cette chambre destinée à être traversée par le carburant étant disposée en amont et à proximité de l'élément filtrant du filtre et du préfiltre lorsqu'il existe, placés sur le circuit d'alimentation dudit moteur ou de ladite installation de chauffage, est caractérisé en ce que la chambre de chauffe est de faible volume par rapport au volume du filtre ou du préfiltre, en ce que l'élément chauffant est constitué par au moins une résistance électrique sous forme de circuit extra-plat sur une plaquette-support rigide, en ce que des moyens de régulation thermique sont adjoints à l'élément chauffant pour empêcher que la température du carburant s'élève au-dessus de 70°C environ, et en ce que l'élément chauffant est protégé du contact direct du carburant par un revêtement électriquement isolant.

La plaquette-support est en un matériau non conducteur de l'électricité (alumine, résine époxy, tôle émaillée, métal pré-oxydé, etc.). Le circuit extra-plat peut être un dépôt métallique sérigraphique ou par décalcomanie ou par projection.

Le revêtement électriquement isolant peut être une vitrification, une projection de résine, une oxydation du métal formant la résistance.

La chambre de chauffe peut être soit un corps de chauffe indépendant placé juste avant l'entrée du filtre et/ou du pré-filtre s'il existe, soit un élément intermédiaire placé entre la tête de filtre et/ou de préfiltre et l'élément filtrant (cartouche filtrante); elle peut aussi être constituée par un moulage ou un forage dans le circuit d'entrée du carburant dans la tête du filtre, et/ou du préfiltre le cas échéant.

D'une façon générale, le mot "filtre" employé dans la description, devra être considéré comme englobant le filtre et le préfiltre.

Pour la source de chaleur, la présente invention fait donc appel, entre autres, aux circuits imprimés. Il est utilisé comme support une plaquette d'une épaisseur approximative d'un à deux millimètres en matériau électriquement isolant, comme sus-indiqué, sur une face de laquelle est par exemple imprimé un circuit métallique en palladium-argent ou platine-argent ou similaire, formé par dépôt sérigraphique ou par projection sous vide. La forme de cette plaquette est un rectangle d'environ 15 x 100 mm et le dessin de la résistance électrique peut être varié : soit un U allongé, soit un U avec des branches en zig-zag permettant d'accroître sa longueur développée sur une plaquette de dimensions réduites, soit tout autre dessin permettant de contrôler sur la surface de la plaquette la répartition convenable de la puissance électrique dégagée par la résistance. La résistance électrique et la surface de la plaquette sont choisies telles que la puissance moyenne de l'élément chauffant ne dépasse pas 10 watts/cm² ± 5% sur chacune de ses faces. Cette puissance au cm² a été calculée pour que la température de la surface de la résistance ne dépasse pas 70°C ± 5% lorsque l'élément chauffant est immergé dans un flux de carburant diésel ou de fioul léger, ayant lui-même une température égale ou inférieure à 15°C à l'entrée du dispositif, ledit flux correspondant aux débits normaux des moteurs diésels en fonction de leur puissance.

La disposition verticale de la plaquette chauffante dans la chambre de chauffe et la forme de celle-ci canalisent le flux suivant un trajet en U, de sorte qu'il lèche la surface de la plaquette tout le long de ses deux faces, si bien que le flux de carburant diésel ou de fioul léger a le plus grand temps de contact possible avec l'élément chauffant (d'où un coefficient d'échange thermique très élevé) et sort, juste à l'issue de la chambre de chauffe, avec un écoulement turbulent, faisant qu'il y a une grande disparité des températures du flux instantané tant dans son volume que dans le temps. De cette façon, si l'enceinte de chauffe est située très près de l'élément filtrant, celui-ci est heurté au moins par intermittence par des filets ou des jets ayant des répartitions de températures très variables, dont certaines dépassent la température de fusion des paraffines les plus lourdes, si bien que les surfaces de filtration se trouvent en fait lavées par fusion des cristaux les plus difficiles à faire fondre.

Une telle résistance en circuit imprimé (ou extra-plat en général), présente en outre l'avantage d'une montée en température extrêmement rapide de la surface d'échange, bien supérieure à celle des crayons chauffants et, de plus, elle n'a pas l'inertie de ceux-ci, ce qui permet de réduire au démarrage le temps de préchauffe.

Pour réguler la température du flux de carburant diésel ou de fioul léger, il est installé un capteur ou palpeur thermique, par exemple du type CTN, suffisamment loin du circuit chauffant pour en minimiser l'influence, et du côté de la plaquette où le carburant quitte la chambre de chauffe, pour en mesurer la température dans cette zone. La nature du capteur est choisie d'une façon préférentielle parmi les semi-conducteurs travaillant sur un courant de faible ampérage, ce capteur, suivant son type, pouvant soit être fixé sur l'extrémité du support de l'élément chauffant du côté de la sortie du carburant de la chambre de chauffe, soit être fixé sur un support indépendant, placé dans le flux de carburant du côté de sa sortie de la chambre de chauffe. Pour ce capteur, dont la résistance varie selon la température, il est choisi d'une façon préférentielle, soit un CTN à coefficient de température négatif, soit un CTP à coefficient de température positif, soit un capteur en silicium CTP, soit un transistor.

Le palpeur thermique et son circuit d'alimentation sont isolés électriquement par tous moyens convenables, afin d'assurer une parfaite isolation des éléments électrifiés par rapport au flux de carburant diésel ou de fioul léger, dans lequel baigne la plaquette chauffante, ce qui est très important sur le plan de la sécurité et indispensable en cas d'application du dispositif aux véhicules transportant des produits dangereux ou aux installations en atmosphère explosive. Cette disposition évite l'inconvénient des contacts électriques à nu dans les carburants ou fiouls légers, rendus partiellement conducteurs par la présence d'humidité et tels que décrits dans certains brevets précités (EP précités 0051936 et 155839).

Le palpeur thermique est relié à un pont transistorisé qui pilote par un courant de 80 à 160 milliampères le relais d'alimentation de la résistance. La régulation de température du flux de carburant diésel ou de fioul léger est tantôt de 65 à 70°C, tantôt de 35 à 40°C, suivant que le dispositif est ou non relié à une deuxième sonde de température dite extérieure, qui ne met le dispositif sous tension que si la température extérieure ou celle du flux de carburant diésel ou de fioul léger en amont du dispositif ne dépasse pas 10°C. Cette sonde extérieure peut être soit un dispositif électronique similaire au système de régulation thermique de la résistance, soit un thermocontact à membrane cloquante, avec un enclenchement à la baisse de température à 5°C et un déclenchement à la hausse de température à 10°C. Ces hystérésis de 5°C sont nécessaires pour éviter les battements du relais, lorsque les températures avoisinent celles de coupure et de réenclenchement.

Les objets et avantages de l'invention seront mieux compris à l'aide de la description faite ci-après d'un mode particulier de réalisation du présent dispositif, en référence aux dessins et au schéma électrique annexés, sans que les formes, les matières utilisées ainsi que certains détails soient limitatifs de l'invention.

La figure 1a est une vue schématique en coupe verticale de la chambre de chauffe du dispositif.

La figure 1b est une vue en coupe suivant la ligne A-B de la figure 1a.

La figure 1c est une vue schématique en coupe horizontale de la chambre de chauffe du dispositif.

La figure 1d est une vue en coupe suivant la ligne C-D de la figure 1c.

La figure 2 est une vue schématique en coupe horizontale de l'élément chauffant.

La figure 3 montre schématiquement la face recto (figure 3a) et la face verso (figure 3b) de la plaquette de l'élément chauffant avec les éléments électriques placés respectivement sur ces deux faces, dans le cas où le palpeur thermique est solidaire de la plaquette.

La figure 4 représente le schéma électrique général du dispositif.

La figure 5 représente schématiquement le circuit imprimé de régulation thermique.

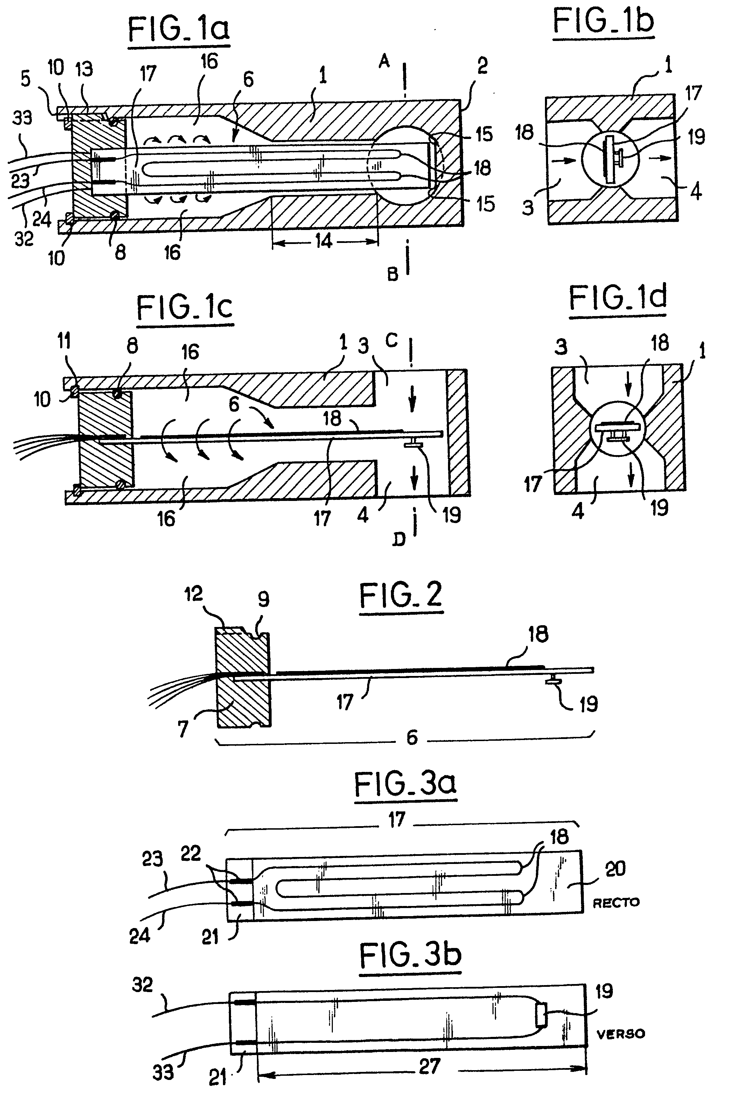

Les figures 1a, 1b, 1c et 1d sont des vues schématiques en coupe de la chambre de chauffe, dans sa version corps de chauffe situé à l'entrée du filtre ou du préfiltre non représenté. Un corps 1 est réalisé en alliage léger pour que les efforts de fatigue dus aux vibrations ne nécessitent pas la présence d'un système de fixation sur des éléments rigides d'autres parties mécaniques du véhicule. Ce corps est en principe taillé dans une barre en alliage léger de section carrée de 30 mm de côté. A l'extrémité 2 du corps sont percées et taraudées, à différents calibres en fonction du diamètre des ouvertures d'entrée du préfiltre ou du filtre, des ouvertures 3 et 4 par lesquelles le carburant diésel ou le fioul léger entre et sort du corps de chauffe. En principe, du côté 3 l'étanchéité sera assurée par un joint torique avec des évidements adaptés au raccord utilisé, et du côté 4, il est exécuté un taraudage dont l'étanchéité est assurée par un joint d'aluminium et un lamage correspondant. Le corps est percé à l'autre extrémité 5 pour permettre l'introduction de l'élément chauffant 6 représenté à la figure 2. Un bouchon 7 ferme cette extrémité 5. Il est en matière inattaquable par le carburant, par exemple un plastique tel que du polyamide 6,6 chargé de verre à 25%, et il est surmoulé sur l'extrémité 21 (figures 3) de la plaquette 17 de l'élément chauffant, sur les dix derniers millimètres environ de cette plaquette, où se trouvent les soudures des conducteurs électriques 23, 24, 32, 33 de l'élément chauffant 6, dont l'extrémité 21 est ainsi enfermée et fixée dans le bouchon 7. L'étanchéité du bouchon 7 de cet élément chauffant est assurée par un joint torique latéral 8, tenu dans le bouchon 7 par une gorge 9; un circlip 10 rentrant dans une gorge 11 brochée dans l'extrémité 5 du corps 1 vient bloquer l'élément chauffant dans ce corps, mais tout autre moyen connu est utilisable pour maintenir le bouchon 7 en place, comme par exemple un contre-boulonnage. Pour assurer le positionnement correct de l'élément chauffant 6, afin de réaliser l'écoulement convenable du carburant diésel ou du fioul léger, qui est l'une des spécificités de l'invention, un ergot 12 du bouchon 7 vient s'insérer dans une entaille 13 préalablement usinée dans le corps 1 ou vice-versa. Le corps 1 a un diamètre réduit sur la longueur 14 pour assurer un trajet approximativement en U du carburant. Cela est représenté également sur les coupes AB et CD, et les tolérances d'usinage de l'intérieur du corps de chauffe sont déterminées pour qu'il en soit ainsi. L'élément chauffant 6 se termine à environ 1 mm de la surface interne 15 du corps 1. Le flux de carburant diésel ou de fioul léger est donc contraint de longer les deux faces de l'élément chauffant 6 en passant d'un côté à l'autre grâce à l'évidement 16 creusé dans le corps 1. Les flèches non chiffrées montrent le sens du flux.

Des défigeurs comportant des chambres de chauffe plus grandes et des résistances de plus grandes dimension et puissance pourront être réalisés pour des moteurs ou installations de plus forte puissance. Egalement on pourra concevoir des défigeurs à plusieurs chambres de chauffe installées en série ou en parallèle suivant les cas et comprenant chacune des organes de chauffe et de contrôle semblables à ceux présentement décrits.

La figure 2 représente l'élément chauffant 6. Il est constitué, en plus du bouchon de fixation 7 déjà décrit, d'une plaquette rigide par exemple d'alumine ou de résine époxy 17 sur laquelle est déposé par exemple par sérigraphie, sur une face seulement, un mélange de palladium-argent constituant la résistance proprement dite 18. Sur l'autre côté de la plaquette, à son extrémité dépourvue de circuit chauffant, se trouve un palpeur thermique 19 et ses deux conducteurs 32,33 également sérigraphiés, dans le cas d'un palpeur pouvant être fixé sur la plaquette, c'est-à-dire qui mesurera la température du carburant (et non pas celle de la plaquette). Plus généralement, le palpeur thermique sera fixé sur un support indépendant monté dans le bouchon 7.

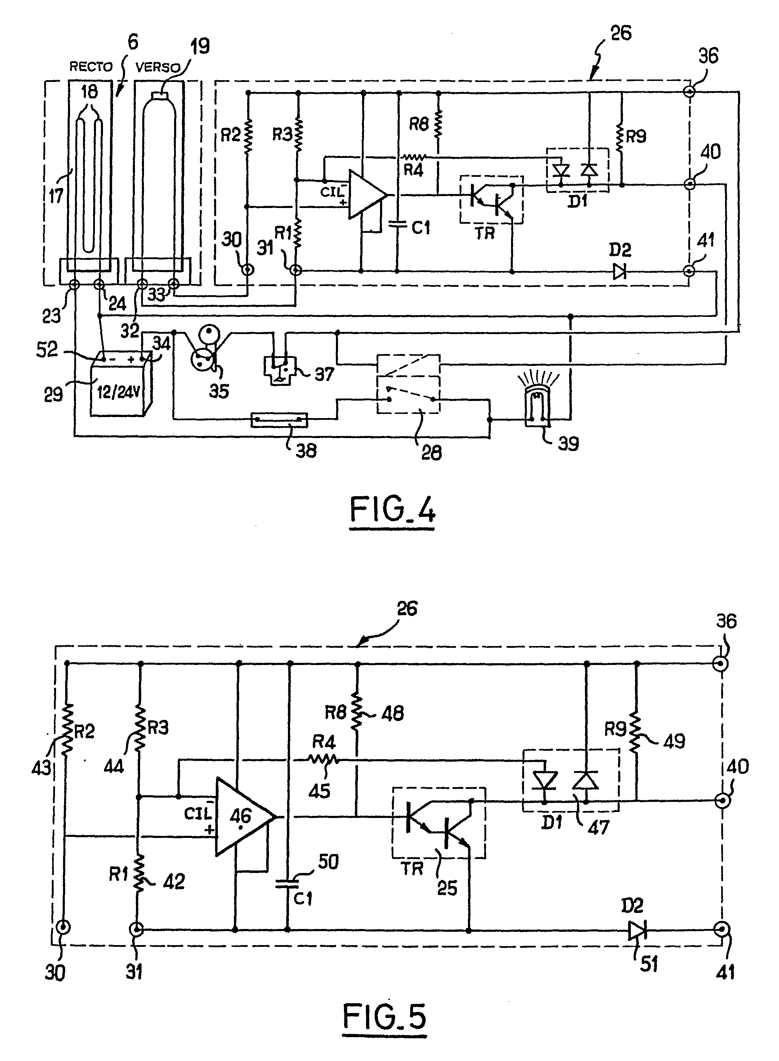

Les figures 3a et 3b représentent la plaquette 17 et ses divers éléments. La forme du dépôt, par exemple sérigraphié, pour le circuit chauffant 18 peut être variable. Il est ici représenté (figure 3a) par un double U qui ne se prolonge pas jusqu'à l'extrémité 20 de la plaquette pour permettre diverses solutions concernant l'entrée et la sortie du carburant diésel ou du fioul léger. Ce dépôt est réalisé d'un seul côté de préférence, pour des questions de coût et pour permettre une disposition plus facile du palpeur ou capteur thermique 19 sur l'autre face (figure 3b). La plaquette comporte à son extrémité 21 deux dépôts 22 larges permettant la soudure des fils d'alimentation électrique (23 et 24). Le palpeur thermique 19 est une thermistance dont on exploite la variation de résistivité en fonction de la température; elle constitue une des branches d'un pont de Wheatstone et l'ensemble du schéma de régulation est décrit ci-après à propos de la figure 5. Pour des raisons de coût, le présent schéma a retenu, dans l'état actuel de la technique, un capteur dont le coefficient de température est négatif, à savoir un CTN ayant pour caractéristiques approximatives, 47.000 ohms à 25°C, 8.000 ohms à 65°C, 6800 ohms à 70°C. Il est à noter que sa non-linéarité n'est pas un inconvénient pour la présente application.

L'ensemble du circuit chauffant 18 et du palpeur thermique 19 est, par exemple, vitrifié recto/verso sur la longueur 27 comprenant la partie active plus une partie rentrant dans le bouchon 7. Ceci permet une isolation électrique parfaite entre les circuits électriques et le carburant diésel ou le fioul léger. Le circuit chauffant 18 est relié au relais 28 (figure 4) par le conducteur 23 et à la borne négative 52 de la batterie 29 (figure 4) par le conducteur 24. Le palpeur thermique 19 est relié aux bornes 30 et 31 du pont de Wheatstone du circuit imprimé de régulation thermique 26 par les conducteurs 32 et 33.

La figure 4 représente le schéma électrique général du dispositif. En plus du circuit imprimé de régulation thermique 26, qui est représenté grossi sur la figure 5 et qui sera décrit ultérieurement, ce schéma comporte une batterie 29, dont la borne + 34 alimente le circuit d'excitation du relais 28 et la borne 36 reliée à la borne 33 de l'élément chauffant 6, par l'intermédiaire du contact général 35 du véhicule ou de l'installation et par une sonde extérieure 37, dont le contact est fermé à la baisse de température vers 5°C et se rouvre à la hausse de température vers 10°C. Cette hystérésis est indispensable pour empêcher que le système ne s'arrête trop tôt en cas de remontée rapide de la température d'ambiance alors que le carburant diésel ou le fioul léger est encore gelé dans le réservoir. Cette sonde peut être soit extérieure, soit insérée dans la canalisation de carburant diésel ou de fioul léger en amont de l'élément chauffant. La borne + 34 de la batterie alimente également, par l'intermédiaire d'un fusible 38 et du circuit de puissance du relais 28, la borne d'entrée 23 de l'élément chauffant 6, le témoin de fonctionnement 39 et la borne 40 du circuit de régulation thermique 26. La borne - 52 de la batterie 29 est reliée à la borne de retour 24 de l'élément chauffant 6, à celle du témoin 39 et à la borne 41 du circuit de régulation thermique 26.

La figure 5 représente le circuit imprimé de régulation thermique 26. Ce circuit est soit situé à l'extérieur de l'élément chauffant 6, soit appliqué sur son verso, soit intégré dans le bouchon surmoulé 7, et les quelques calories dégagées par ce circuit secondaire ne pourraient être considérées comme prenant une part active au réchauffage du carburant diésel ou du fioul léger, surtout dans la version où seul le palpeur thermique 19 y est noyé. Ce circuit de régulation thermique 26 comporte différents composants électroniques travaillant avec des intensités faibles comprises entre 100 et 200 milliampères. Le circuit de détection des seuils de température repose sur l'utilisation d'un pont de Wheatstone suivi d'un comparateur analogique, le changement d'état du comparateur se produisant à l'équilibre du pont; l'effet d'hystérésis, si important pour le bon fonctionnement global du dispositif, est obtenu par la présence d'une résistance en parallèle sur une branche (résistance R4-45); cette résistance assure une hystérésis entre les températures de coupure et de réenclenchement, hystérésis qui est nécessaire pour supprimer les battements dans les circuits électriques et réduire ainsi la fréquence des courants subtransitoires. De plus, et ceci est également une spécificité de l'invention, un tel circuit fait que la régulation est insensible à la tension d'alimentation du pont de Wheatstone, que ce soit sous batterie de 12 ou de 24 V, ou sous alternateur de 14,3 V ou de 28 V. Le pont de Wheatstone a des résistances R1-42, R2-43, R3-44, qui sont identiques, de valeur R sensiblement égale à la valeur ohmique du palpeur thermique CTN 19 à 65°C (si l'on doit réguler à cette valeur la température maximale du carburant diésel ou du fioul léger). Toute autre température, par exemple 40°C, entraînerait d'autres valeurs des résistances, mais le schéma serait identique. Le choix de la valeur en ohms des résistances du pont de Wheatstone détermine la température de coupure de l'élément chauffant. La résistance R4-45 aura une valeur 4 fois supérieure à la valeur R; R doit être compris entre 5 et 10 Kohms, ce qui conditionne également le choix du CTN du palpeur thermique CTN 19.

Il est ensuite utilisé comme comparateur un circuit linéaire CIL-46 en microboîtier (de préférence à un amplificateur différentiel avec des transistors discrets). Dans l'état actuel de la technique, il est fait appel à un comparateur SOIC de Motorola.

Le relais 28 est commandé par un transistor Darlington intégré TR-25 comprenant deux transistors successifs, l'un bipolaire de faible puissance utilisé en mode saturé bloqué dans un montage en émetteur commun, l'autre assurant la saturation. A la place de ce transistor Darlington on pourrait faire appel à la technologie des transistors Mosfet.

Le courant de base est égal au 1/10ème du courant de collecteur. Les résistances R8-48 et R9-49 ont des valeurs comprises entre 5 et 10 Kohms. La résistance R9-49, en parallèle avec la bobine du relais, a seulement pour but de permettre la vérification du bon fonctionnement du système, le relais étant déconnecté. La résistance R8-48 fournit le courant de base du transistor 25, lorsque la sortie du comparateur est à l'état haut.

Pour assurer la fiabilité du système contre les surtensions des courants subtransitoires, un ensemble D1-47 de deux diodes est placé en parallèle dans le circuit. De plus, pour s'assurer que le comparateur 46 n'entrera jamais en vibration, il est introduit dans le circuit le condensateur C1-50, dont la position doit être la plus rapprochée possible de la sortie du comparateur 46. Si C1-50 était trop éloigné, ce condensateur C1-50 n'aurait aucun effet. Une diode D2-51 a été introduite pour protéger le circuit imprimé contre toute erreur de branchement; elle est placée en série entre le circuit de contrôle et la mise à la masse de la résistance de chauffage.

D'autres appareils transistorisés peuvent compléter le circuit de régulation thermique pour en accroître la fiabilité et la précision. Quant à la résistance R4-45, qui réduit la fréquence des courants subtransitoires comme susindiqué, elle assure de ce fait une durée de vie normale du circuit électrique de chauffage et du circuit électrique de régulation thermique, et notamment du relais 28 d'alimentation de l'élément chauffant 6, des transistors 25 commandant ce relais, de la résistance chauffante 18, des diodes 47 prévues pour réduire les effets néfastes desdits courants subtransitoires et de la diode 51 prévue pour protéger le circuit imprimé contre une erreur de branchement.

Le circuit électrique est tel que l'alimentation de puissance (celle de la résistance chauffante), est faite par deux fils indépendants (connexions 23 et 24), dont l'un n'est pas nécessairement relié à la masse, et que l'alimentation du circuit de commande à faible puissance est également réalisée par deux autres fils indépendants (connexions 36 et 41) dont l'un n'est pas nécessairement relié à la masse.

REVENDICATIONS

1.     Procédé de défigeage des carburants contenant des paraffines, lorsque celles-ci, sous l'effet du froid, obstruent l'élément filtrant du filtre et du préfiltre lorsqu'il existe, placés sur le circuit d'alimentation d'un moteur à inflammation par compression ou d'une installation de chauffage, une pompe étant située en aval du filtre pour aspirer le carburant provenant d'un réservoir, procédé suivant lequel on dispose une source de chaleur dans une chambre de chauffe, qui est placée en amont et à proximité dudit élément filtrant et qui sera traversée par le flux de carburant, ce procédé étant caractérisé en ce que l'on utilise une chambre de chauffe (1) de faible volume par rapport au volume du filtre ou du préfiltre et une source de chaleur (6) régulée à 70°C environ, qui projettera dans l'élément filtrant, au démarrage de la pompe, les quelques centimètres cubes du carburant, contenus dans la chambre de chauffe et préchauffés à 70°C environ, et qui projettera ensuite dans l'élément filtrant des filets très chauds de carburant inclus dans le flux de celui-ci, dont la température moyenne reste inférieure à 40°C, tandis que certains au moins desdits filets ont une température voisine de 70°C, ladite source de chaleur présentant une grande surface de contact avec le carburant, cette surface étant isolée électriquement par mesure de sécurité et ayant une température homogène, et l'écoulement du carburant dans la chambre de chauffe, lorsque la pompe est en fonctionnement, étant dirigé autour de la source de chaleur de telle sorte qu'il y ait le plus grand temps de contact possible et un échange thermique élevé entre la source de chaleur et le carburant et que celui-ci soit mis en turbulence, ce qui engendre une disparité des températures du flux instantané dans son volume et dans le temps et fournit par intermittence, à la sortie de la chambre de chauffe, des filets ou des jets de carburant à des températures proches de la température de surface de l'élément chauffant.

2.    Procédé suivant la revendication 1, caractérisé en ce que l'écoulement du carburant est dirigé suivant un trajet sensiblement en U autour de la source de chaleur dans la chambre de chauffe.

3.    Dispositif de défigeage de carburants contenant des paraffines pour la mise en oeuvre du procédé suivant la revendication 1, comprenant une chambre de chauffe dans laquelle est logé un élément chauffant, cette chambre destinée à être traversée par le carburant étant disposée en amont et à proximité de l'élément filtrant du filtre et du préfiltre lorsqu'il existe, placés sur le circuit d'alimentation dudit moteur ou de ladite installation de chauffage, caractérisé en ce que la chambre de chauffe (1) est de faible volume par rapport au volume du filtre ou du préfiltre, en ce que l'élément chauffant (6) est constitué par au moins une résistance électrique chauffante (18) sous forme de circuit extra-plat sur une plaquette-support rigide (17), en ce que des moyens de régulation thermique (19, 32, 33, 26) sont adjoints à l'élément chauffant (6) pour empêcher que la température du carburant s'élève au-dessus de 70°C environ, et en ce que l'élément chauffant est protégé du contact direct du carburant par un revêtement électriquement isolant.

4.    Dispositif suivant la revendication 3, caractérisé en ce que la résistance électrique chauffante (18) a une forme lui conférant une grande longueur développée et permettant d'assurer la puissance électrique convenable devant être dégagée par cm² de surface de la plaquette-support en contact avec le carburant.

5.    Dispositif suivant la revendication 3, caractérisé en ce que la résistance électrique chauffante (18) a la forme d'un U allongé avec des branches en zig-zag constituant un double U.

6.     Dispositif suivant l'une quelconque des revendications 3 à 5, caractérisé en ce que la résistance électrique chauffante (18) est formée par un dépôt métallique extra-plat sur un support (17) en matériau électriquement isolant.

7.     Dispositif suivant l'une quelconque des revendications 3 à 6, caractérisé en ce que la résistance électrique chauffante (18) et sa plaquette-support (17) sont prévues pour que la puissance dissipée par l'élément chauffant (6) soit égale ou inférieure à environ 10 watts/cm² sur chaque face, pour que la température de surface de l'élément chauffant ne dépasse pas 70°C environ, dans un flux normal de carburant.

8.     Dispositif suivant l'une quelconque des revendications 3 à 7, caractérisé en ce que les moyens de régulation thermique (19,32,33,26) sont prévus pour empêcher que la température du carburant dépasse 70°C.

9.     Dispositif suivant l'une quelconque des revendications 3 à 8, caractérisé en ce que la chambre de chauffe (1) est placée juste avant le filtre et/ou le préfiltre.

10.    Dispositif suivant l'une quelconque des revendications 3 à 8, caractérisé en ce que la chambre de chauffe (1) fait partie du circuit d'entrée du carburant dans la tête de filtre et/ou de préfiltre, ou est placée entre la tête de filtre et/ou de préfiltre et l'élément filtrant.

11.    Dispositif suivant l'une quelconque des revendications 3 à 10, caractérisé en ce que la forme intérieure de la chambre de chauffe (1) et la position de l'élément chauffant (6) dans celle-ci sont telles que le carburant suive un trajet approximativement en U autour de l'élément chauffant, dans la chambre de chauffe.

12.    Dispositif suivant l'une quelconque des revendications 3 à 11, caractérisé en ce que la chambre de chauffe (1) est fermée, à son extrémité (5) qui est ouverte pour permettre l'introduction de l'élément chauffant (6), par un bouchon (7) en une matière inattaquable par le carburant, bouchon dans lequel est enfermée et fixée l'extrémité (21) de l'élément chauffant (6), sur laquelle sont soudés les conducteurs (23,24,32,33) reliés à cet élément, des moyens (8,9,10,11) étant prévus pour assurer l'étanchéité de la fermeture et des moyens (12,13) étant prévus sur la paroi latérale du bouchon (7) et sur la paroi interne de la chambre de chauffe (1) pour le positionnement dans le bon plan de l'élément chauffant dans la chambre de chauffe.

13. Dispositif suivant l'une quelconque des revendications 3 à 12, caractérisé en ce que lesdits moyens de régulation thermique comprennent un circuit électrique (26) incluant un capteur de température (19,32,33), placé à une distance telle de la résistance chauffante (18) qu'il soit peu influencé par celle-ci et baignant dans le carburant, du côté de la sortie de celui-ci de la chambre de chauffe pour mesurer dans cette zone la température du carburant.

14. Dispositif suivant la revendication 13, caractérisé en ce que ledit circuit électrique (26) comprend un pont de Wheatstone (19,32,33,30,31,42,43,44) suivi d'un comparateur analogique (46), pour la détection des seuils de température, ledit capteur de température (19,32,33) constituant l'une des branches du pont de Wheatstone.

15. Dispositif suivant la revendication 14, caractérisé en ce que les valeurs des résistances du pont de Wheatstone sont choisies telles qu'elles déterminent la température de coupure de l'élément chauffant.

16. Dispositif suivant l'une quelconque des revendications 13 à 15, caractérisé en ce que le circuit électrique (26) de régulation thermique est un circuit imprimé.

17. Dispositif suivant l'une quelconque des revendications 13 à 16, caractérisé en ce que le capteur de température (19) est un semi-conducteur travaillant sur courant de faible ampérage et dont la résistance varie selon la température.

18. Dispositif suivant l'une quelconque des revendications 14 à 17, caractérisé en ce que le pont de Wheatstone comprend, en parallèle sur l'une de ses branches, une résistance supplémentaire (45), qui assure une hystérésis entre les températures de coupure et de réenclenchement, hystérésis nécessaire pour éviter les phénomènes de battement dans les circuits électriques du dispositif.

19. Dispositif suivant l'une quelconque des revendications 13 à 18, caractérisé en ce que des éléments électriques appropriés sont insérés dans le circuit (26) de régulation thermique pour accroître la fiabilité en cas de mauvais branchements et contre les courants subtransitoires.

20. Dispositif suivant l'une quelconque des revendications 3 à 20, caractérisé en ce que la chambre de chauffe (1) est associée à d'autres chambres de chauffe semblables, installées en série ou en parallèle avec la première et pourvues d'organes de chauffe et de contrôle semblables à ceux de celle-ci.

21. Dispositif suivant l'une quelconque des revendications 3 à 20, caractérisé en ce que la résistance électrique chauffante (18) est un dépôt métallique extra-plat recouvert d'un revêtement électriquement isolant, et en ce que la plaquette-support (17) est en un matériau non conducteur de l'électricité.

22. Dispositif suivant la revendication 21, caractérisé en ce que la résistance électrique chauffante (18) est formée par un dépôt de palladium-argent ou de platine-argent, en ce que la plaquette-support (17) est en alumine ou en résine époxy, et en ce que le revêtement isolant de la résistance électrique est en dépôt de verre.

23. Dispositif suivant l'une quelconque des revendications 13 à 19, caractérisé en ce que le circuit électrique est tel que l'alimentation de la résistance chauffante (connexions 23 et 24) et celle du circuit de commande (connexions 36 et 41) sont assurées, chacune, par deux fils électriques indépendants, dont l'un, pour chaque alimentation, n'est pas nécessairement relié à la masse.

## FIG_1a

## FIG_1b

## FIG_1c

## FIG_1d

## FIG_2

## FIG_3a

RECTO

## FIG_3b

VERSO

## FIG.4

## FIG.5

### Office européen des brevets

## RAPPORT DE RECHERCHE EUROPEENNE

EP  87 40 0676

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int Cl 4) |
| D,A | EP-A-0 155 839  (TEXAS INSTRUMENTS) <br> * Abrégé; page 2,  lignes  10-26; page 3,  lignes  8-21;  page 5, lignes 15-24 * <br><br> --- | 1 | F 02 M  31/12 |
| A | GB-A-2 058 920  (PIERARD) <br> *   Page   1,   lignes 57-61,66-77,84-92,121-130;  page 2, lignes 1-7,18-41,70-100;  page 3, lignes 65-81. * <br><br> --- | 1 | |
| A | GB-A-2 049 914  (KROLL) <br><br> *  Résumé;  page  1,  lignes 57-76,121-126;  page  2,  lignes 60-78,113-117 * <br><br> --- | 1,3,9, 10,12 | |
| A | GB-A-2 014 415  (TEMPETRO) <br><br> *  Résumé;  page  2,  lignes 50-57,120-126;  page  3,  lignes 50-73,86-90 * <br><br> --- | 14,15, 17,18 19 | DOMAINES TECHNIQUES RECHERCHES (Int Cl 4) <br><br> F 02 M |
| A | FR-A-2 529 957  (DEBARNOT et al.) <br><br> *  Page  1,  lignes  1-3; page 2, lignes 18-36 * <br><br> ---          -/- | 17,18, 19 | |

Le présent rapport de recherche a été établi pour toutes les revendications

| Lieu de la recherche | Date d'achèvement de la recherche | Examinateur |
|---|---|---|
| LA HAYE | 24-06-1987 | JORIS J.C. |

Office européen
des brevets

# RAPPORT DE RECHERCHE EUROPEENNE

Numero de la demande

EP 87 40 0676

| | DOCUMENTS CONSIDERES COMME PERTINENTS | | Page 2 |
|---|---|---|---|
| Catégorie | Citation du document avec indication, en cas de besoin, des parties pertinentes | Revendication concernée | CLASSEMENT DE LA DEMANDE (Int. Cl. 4) |
| A | GB-A-2 076 056 (LUCAS INDUSTRIES) * Page 1, lignes 101-107 * | 16 | |
| | --- | | |
| A | PATENT ABSTRACTS OF JAPAN, vol. 8, no. 94 (M-293)[1581], 28 avril 1984; & JP-A-59 7764 (TOUKIYÔU ROKI K.K.) 14-01-1984 * Résumé * | 1,3,12 | |
| | --- | | |
| A | EP-A-0 086 602 (CARLE-HAY) * Résumé; page 2, lignes 5-36 * | 1 | |
| | --- | | |
| A | GB-A-2 114 409 (ENTWISTLE) * Résumé; page 1, lignes 42-49,89-94,110-115 * | 3,5 | |
| | --- | | DOMAINES TECHNIQUES RECHERCHES (Int. Cl. 4) |
| A | US-A-1 532 189 (LAMONT) | | |
| | ----- | | |

| Le présent rapport de recherche a été établi pour toutes les revendications | | |
|---|---|---|
| Lieu de la recherche | Date d'achèvement de la recherche | Examinateur |
| LA HAYE | 24-06-1987 | JORIS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82